# EUROPEAN PATENT APPLICATION

(11) **EP 2 592 323 A2**
(43) Date of publication of application: **15.05.2013**
(21) Application number: 12250171.1
(22) Date of filing: 12.11.2012
(51) Int. Cl.: F16M 11/10, F16M 11/24, F16M 11/20, F16M 13/02

(54) **Articulated mechanical arm**

(30) Priority: 10.11.2011 GB 201119392
(71) Applicant: Bytec Group Limited, Salfords, Redhill RH1 5DZ (GB)
(72) Inventor: Mifsud, Bernard, Salfords, Surrey, RH1 5DZ (GB); Iserte, Enrique, Salfords, Surrey, RH1 5DZ (GB)
(74) Representative: Sayer, Robert David

(57) **Abstract**

An articulated wall mounted mechanical arm (1) includes a swivel joint (3) for attachment to a wall surface through a bracket (5). The swivel joint is formed with a central openended pass-through space (19) which is dimensioned and configured to enable cabling (for example an electric cable) with a cable connector attached to pass through the space and enter a lengthwise extending open sided channel formed in an arm section of the mechanical arm. Removable covers and/or caps (33/34) are provided selectively to close the open side of the channel and at least one open end of the pass-through space.

## Description

This invention relates to a wall mountable articulated mechanical arm which includes one or more platforms for supporting items including, but not limited to, monitors, televisions and other apparatus for providing entertainment, laptops and other computing equipment, medical equipment for, for example, receiving and transmitting treatment related data, control devices, fluid and gas delivery devices and the like.

The term "wall" is intended to include any fixed or moveable surface to which a mechanical arm is to be secured.

Wall mounted articulated arms are known which are secured to a supporting wall through a pivotal connection and include pass-through spaces for power or like cabling or conduits. One example is electrical cabling including cable headers for connecting electrical apparatus located on the or a platform of the mechanical arm to a mains or other source of electricity remote from the arm. Examples of such articulated arms can be seen from EP0928393B, US6601811B, EP1914467B and DE102006053928B.

A major problem with all articulated arms known to the Applicant is that the cabling, whether it be electrical cabling with cable headers attached or other types of cabling with appropriate connectors attached, must be introduced into the pass-through spaces of the articulated arm before the arm is secured to the supporting wall surface. Securing the arm to a wall surface after threading the cabling is time consuming particularly if the arm needs to be dismantled from the wall surface and used cabling removed before fresh cabling can be introduced into the arm. Furthermore, the actual threading of the required cabling and connectors into and through the articulated arm of known mechanical arms is both difficult and time consuming.

It is an object of mechanical arms in accordance with the invention that these disadvantages no longer apply.

Whereas the invention will primarily be described below with reference to mechanical arms which include electrical cabling, the term "cabling" is to be taken to include cabling or conduits for conveying, for example, hydraulic or other liquids or fluids to and from items such as pumps and delivery systems supported on the platform of the mechanical arm, gases including oxygen at a positive or negative pressure, and electronic data to and from monitors, computing devices and the like.

The present invention sets out to provide an articulated mechanical arm which enables cabling and connectors attached to the cabling to be introduced quickly into and passed through the arm for connection to items supported on the or each platform connected to the arm with or without the arm first being secured to the supporting wall surface.

In one aspect, the invention provides a wall mountable articulated mechanical arm which comprises at least one elongate arm section including at one end a first joint comprising a first fixed section for attachment to a wall surface and a second pivotal section which forms with the first section a swivel joint to enable the mechanical arm section to pivot relative to the wall surface, the mechanical arm section including at its end remote from the first joint a second joint which comprises a first fixed section and a second pivotal section which forms part of a second mechanical arm section or a platform, each joint being formed with a pass-through space dimensioned and shaped to receive and permit passage of cabling with a connector attached from one side of the joint to the other, each joint further including opposed removable covers which lie on opposite sides of the joint and facilitate passage of the cabling and connector through the joints, and the or each mechanical arm section including lengthwise removable covers for facilitating passage of the cabling and connector from the first joint along and through the arm and into the second joint, the arrangement being such that the pass-through space of the first and second joints and the pass-through space within the or each arm section enables the cabling to be threaded through the length of the mechanical arm when it is mounted on a supporting wall.

The term "cabling connector" is intended to include cable headers and other connection devices for attaching the cabling to apparatus to be supported by the or each platform of the mechanical arm.

The mechanical arm may include a plurality of additional arm sections each connected to its neighbouring arm sections through first and second joints as described in the preceding paragraph.

A plurality of platforms may be positioned along the length of the mechanical arm.

The cabling connector may comprise a cable header of electrical cabling.

The cable pass of the first swivel joint preferably includes an upper removable cap.

The lower surface of the or each mechanical arm preferably includes a removable cover.

The lower and upper cable pass-through space of the second swivel joint each preferably includes a cap or cover.

The mechanical arm preferably supports at its end remote from the first joint a platform for supporting electrical apparatus. Additional platforms may be supported by the mechanical arm.

In another aspect, the invention provides a wall mountable mechanical arm which includes a swivel joint including means for attachment to a wall surface, the swivel joint being formed with a central open-ended pass-through space which is dimensioned and configured to enable cabling with a connector attached to pass through and enter a lengthwise extending open-sided pass-through channel formed in a lengthwise extending open-sided section of the mechanical arm, and removable covers for closing at least one open end of the pass-through space of the swivel joint and the open side of the arm section.

The invention will now be described with reference to the accompanying diagrammatic drawings in which:-
Figure 1 is a perspective view of a first mechanical arm in accordance with the invention;
Figures 2 and 3 are side views in section of the mechanical arm illustrated in Figure 1;
Figure 4 is a perspective view of a further mechanical arm in accordance with the invention;
Figure 5 is a perspective view of a still further mechanical arm in accordance with the invention;
Figure 6 is a detail to an enlarged scale of that part of the mechanical arm of Figure 5 indicated by reference letter C;
Figure 7 is a section taken through the mechanical arm illustrated in Figure 5;
Figure 8 is a detail to an enlarged scale of the mechanical arm shown in Figure 7 indicated by reference letter D; and
Figure 9 is an exploded view of a joint which forms part of the mechanical arm illustrated in Figures 5 to 8.

The illustrated mechanical arms are specifically described hereinafter in the context of carrying electrical cabling and cable headers for connection to electrically operated monitors and the like located on one or more platforms of the arms. The illustrated mechanical arms could, however, as stated previously, be employed for carrying other forms of cabling.

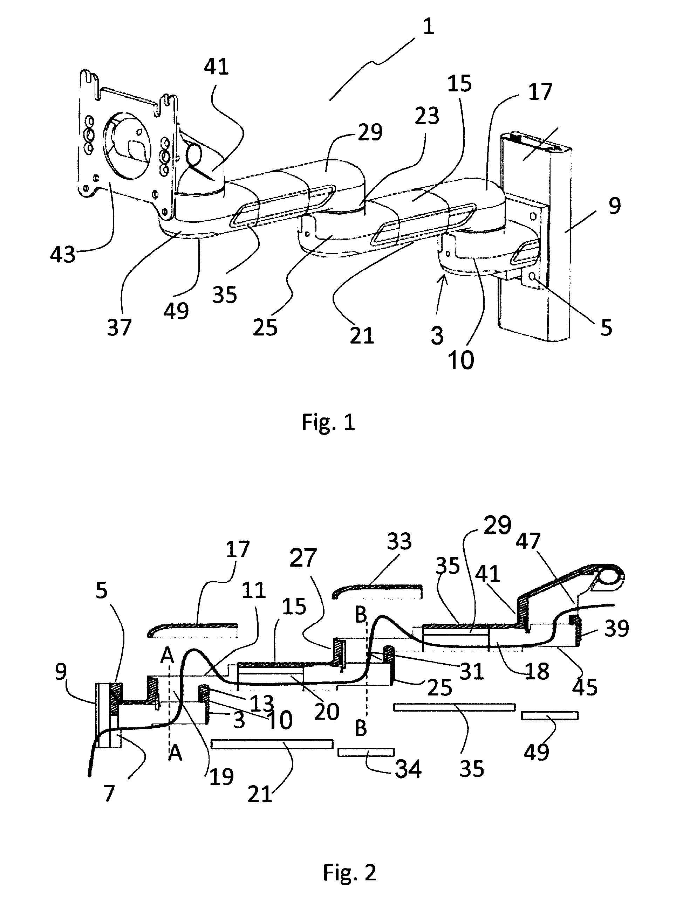

The mechanical arm 1 illustrated in Figures 1 to 3 comprises a joint 3 secured through a fixing plate 5 to a slide member 7 of a slotted rail 9 secured to a wall surface. The joint 3 includes a fixed section 10 formed in its upper surface with an opening 11 (see Figure 2) into which a swivel joint section 13 locates. The swivel joint section 13 forms one end of an elongate mechanical arm section 15, the joint enabling the mechanical arm section to swivel about a vertical axis passing A-A through the centre of the joint.

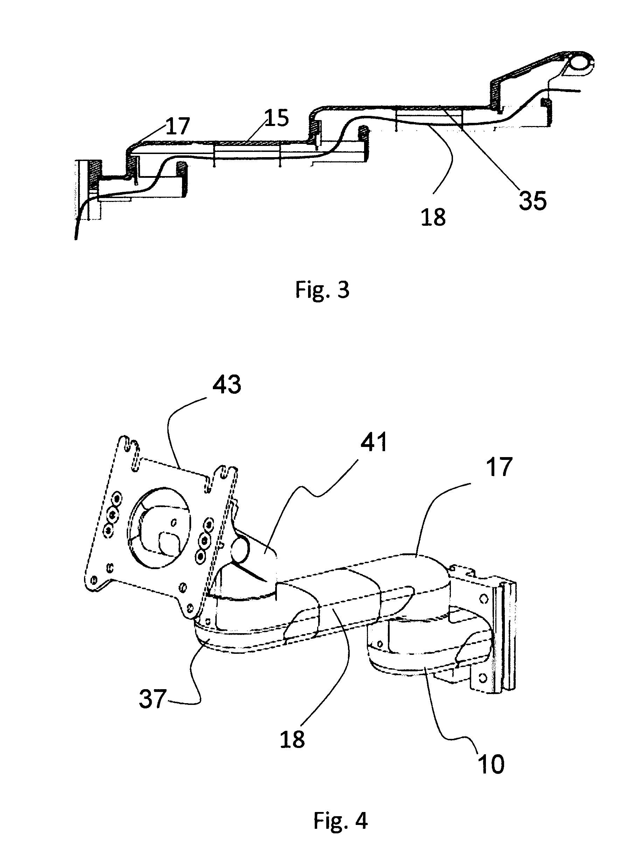

Each joint section is formed with a central passageway 19 which extends generally vertically through the joint from its upper to its lower surface. The upper joint surface is covered by a removable cap 17 whereby the open ended passageway 19 is defined within the joint when the cap 17 is removed. The lower end of the joint may be permanently open or may be closed by a removable cap (not shown). The shape, size and configuration of the passageway 19 are sufficient to enable cabling 18 (see Figures 2 and 3) with cable headers or the like attached to the leading cable end to pass along the length of the passageway.

The arm section 15 includes a lengthwise extending cabling passageway 20 of a cross section able to receive and retain cabling 18 internally. The underside of the arm section below the passageway 20 is open but closable by a cover 21.

The end of the arm section 15 remote from the joint 3 carries a second joint 23 which includes a fixed section 25 secured to the arm section 15. As for the joint 3, the fixed joint section 25 is formed with an opening into which a swivel joint section 27 formed at one end of a second mechanical arm section 29 projects. The joint enables the arm section 29 to swivel about a vertical axis B-B passing through the centre of the joint.

As for joint 3, the second joint 23 is formed with a central passageway 31 which extends generally vertically through the joint from its upper surface to its lower surface. The upper joint surface is covered by a removable cap 33 and the lower joint surface by a removable cover 34. The shape, size and configuration of the central passageway 31 are sufficient to enable cabling 18 with cable headers or the like attached to the cabling ends to pass along the entire length of the passageway.

The arm section 29 includes a lengthwise extending cabling passageway 35 of a cross section able to receive and retain cabling 18 for equipment supported by the arm. The underside of the arm section 29 below the passageway 35 is open but closable by a cover 36.

The mechanical arm section 29 carries at its end remote from the joint 23 a third joint 37 which includes a fixed section 39 secured to the mechanical arm section 29 and a swivel section 41 to which is attached a platform 43 for supporting electrical equipment such as monitors, TV sets or the like. The platform is able to pivot relative' to the swivel joint section 41.

As for joints 3 and 23, the third joint 37 is formed with a central passageway 45 which extends through the joint from its upper to lower surface. The lower joint surface is covered by a removable cover 49. The shape, size and configuration of the passageway 45 are sufficient to enable cabling 18 with cable headers or the like attached to the cable ends to pass along the entire length of the passageway.

The mechanical arm illustrated in Figure 4 (in which like integers to those shown in Figures 1 to 3 have been given the same reference numerals) is substantially the same as that illustrated in Figures 1 to 3, the essential difference being that it includes only one arm section.

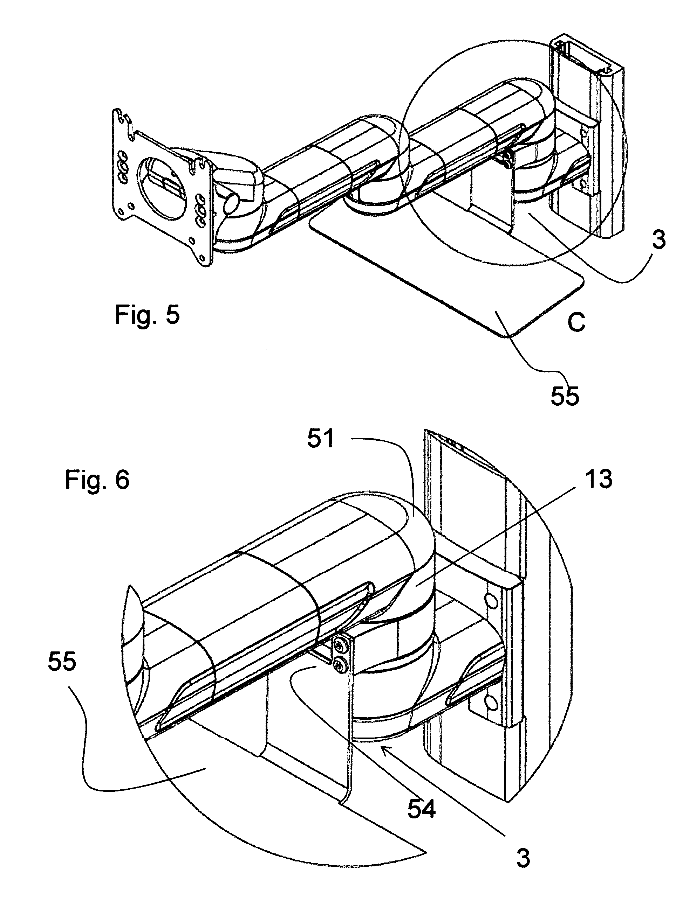

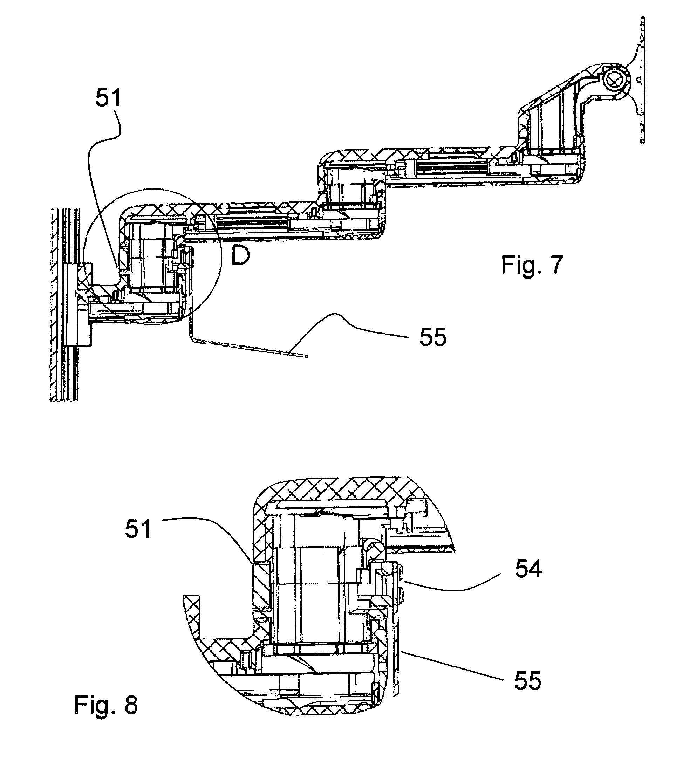

Turning now to the mechanical arm illustrated in Figures 5 to 9 (in which like integers to those illustrated in Figures 1 to 4 have been given the same reference numerals), in this embodiment the swivel joint 3 includes an adapter 51 which acts as a spacer between the lower and upper joint sections 10, 13 to add height to the joint 3. The adapter 51 includes holes 53 for receiving fixing screws 54 or the like to enable an additional platform 55 to be supported by the adapter 51 and, therefore, the joint 3. The adapter 51 includes a open ended through passage 57 through which cabling can pass for attachment to items supported by the platform 55.

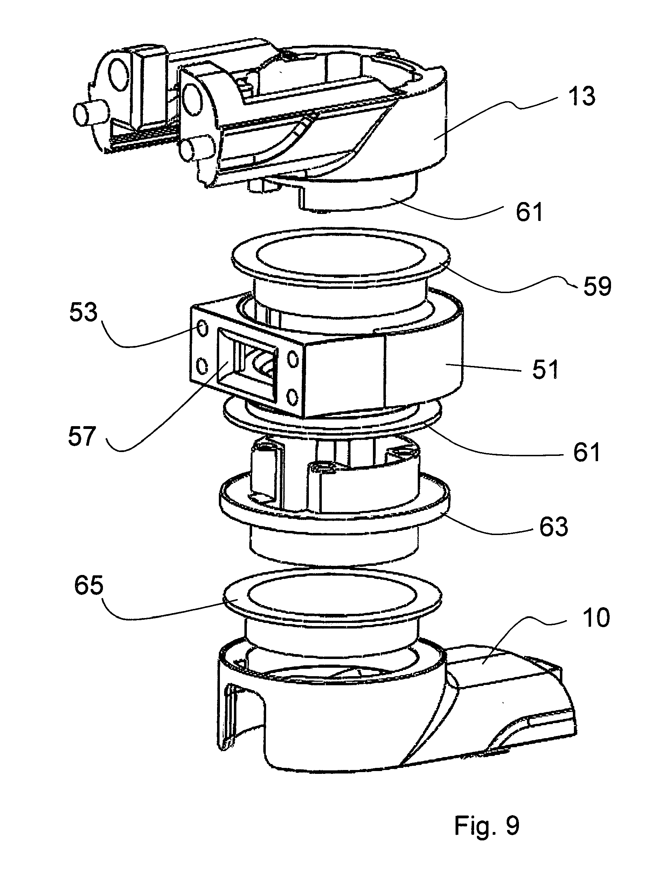

As will be seen more clearly from Figure 9, the adapter 51 includes upper and lower annular bearings 59, 61 which locate in suitably dimensioned openings formed in the upper and lower parts of the adapter, and an annular collar 63 which, on assembly, is connected to a downwardly extending annular sleeve 64 of the swivel joint section 13 to trap the adapter 51 in position whilst enabling it to rotate about a vertical axis passing through the swivel joint. The underside of the collar 63 locates in an annular bearing 65 which in turn seats within a suitably sized opening formed in the joint section 10.

Major disadvantages with articulated mechanical arms known to the Applicant include the time taken to thread electrical cabling into and through the arms to supported electrical equipment and the fact that threading (or unthreading) of the cabling cannot be achieved with the mechanical arms secured in place on a supporting wall or other surface. Articulated mechanical arms in accordance with this invention can be threaded (or unthreaded) with cabling far quicker than existing mechanical arms and with the arm already wall mounted.

Threading of cabling into the illustrated mechanical arms will now be described.

Threading of the cabling takes place with the mechanical arm secured to the fixing plate 5 which, in turn, is located in the slotted rail 9 secured to the wall surface. The cabling section to be threaded is present within the rail 9 with its end remote from the cabling section connected or connectable to a power supply.

The electrical cabling with cable header attached passes from the slotted rail 9 into the lower part of the fixed section 10 of the joint 3. At this point the cap 17 is removed from the upper surface of the joint. The cabling is passed through the open ended passageway 19 of the joint and the upper now open end of the passageway. The shape, size and configuration of the passageway 19 enable the cabling and cable header to pass freely through the joint from its under surface to its upper surface.

The cabling is then passed into and through the arm section 15 with the cover 21 and cap 35 removed. As the cabling approaches the second joint 23 its leading end is passed from below into and through the passageway 31 in much the same way as described with reference to passageway 19. Again, the dimensions, shape and configuration of the passageway 31 enables the cabling with cable header attached to pass relatively freely through the joint from its under surface to its upper surface.

The cabling is then introduced into the arm section 29 with the respective cover and cap removed before being passed via the side opening 47 to be accessible to electrical equipment located on the platform 43.

The covers and caps are then replaced.

For the second embodiment of the invention illustrated in Figures 5 to 7, the adapter 51 increases the height of the swivel joint 3 and provides an additional platform 55 for supporting items of equipment as already described. The opening 57 provides an entry space for cabling and the like.

It will be appreciated that the foregoing is exemplary of wall mounted articulated mechanical arms in accordance with the invention and that modifications can readily be made without departing from the true scope of the invention as set out in the appended claims.

## Claims

1. A wall mountable articulated mechanical arm which includes at one end a first joint comprising a first fixed section for attachment to a wall surface and a second pivotal section which forms with the first section a first swivel joint to enable the mechanical arm to pivot relative to the wall surface, the mechanical arm including at its end remote from the first joint a second joint which comprises a first fixed section and a second pivotal section which forms part of a second mechanical arm or a platform for receiving electrical apparatus, each joint being formed with a cable pass-through space dimensioned and shaped to receive and permit passage of electrical cabling and a cable header from one side of the joint to the other, each joint further including opposed removable covers which lie on opposite sides of the joint and facilitate passage of the electrical cabling and cable header through the joints, and the mechanical arm including lengthwise removable covers for facilitating passage of the electrical cabling and cable headers from the first joint along and through the arm and into the second joint, the arrangement being such that the pass-through space of the first and second joints and the pass-through space within the arm can be achieved with the mechanical arm secured to a bracket or the like secured to the supporting wall.

2. A mechanical arm as claimed in claim 1 wherein the cable pass of the first swivel joint includes an upper removable cap.

3. A mechanical arm as claimed in claim 1 or claim 2 wherein the lower surface of the mechanical arm includes a removable cover.

4. A mechanical arm as claimed in any one of the preceding claims wherein the lower and upper cable pass-through space of the second swivel joint each includes a cap or cover.

5. A mechanical arm as claimed in any one of the preceding claims which includes at its end remote from the first joint a platform for supporting electrical apparatus.

6. A wall mountable mechanical arm which includes a swivel joint for attachment to a wall surface, the swivel joint being formed with a central open-ended pass-through space which is dimensioned and configured to enable an electric cable with a cable header or the like attached to pass through and enter a lengthwise extending open-sided channel formed in a longitudinal open-sided section of the mechanical arm, and removable covers for closing at least one open end of the pass-through space of the swivel joint and the open side of the arm section.

7. A mechanical arm substantially as herein disclosed and as described with reference to Figures 1 to 4 or Figures 5 to 9 of the accompanying drawings.
